# EUROPÄISCHE PATENTANMELDUNG

(11) **EP 3 876 556 A1**
(43) Veröffentlichungstag der Anmeldung: **08.09.2021**
(21) Anmeldenummer: 21155522.2
(22) Anmeldetag: 05.02.2021
(51) Int. Cl.: H04R 25/00

(54) **BINAURALES HÖRSYSTEM MIT ZWEI IM ODER AM OHR DES NUTZERS GETRAGENEN HÖRINSTRUMENTEN SOWIE VERFAHREN ZUM BETRIEB EINES SOLCHEN HÖRSYSTEMS**

(30) Priorität: 03.03.2020 DE 102020202725
(71) Anmelder: Sivantos Pte. Ltd., Singapore 539775 (SG)
(72) Erfinder: HOFER, Wanja, 91058 Erlangen (DE); SUBERVIOLA, Ion, 91054 Erlangen (DE); WURZBACHER, Tobias, 90768 Fürth (DE)
(74) Vertreter: FDST Patentanwälte

(57) **Zusammenfassung**

Es wird ein binaurales Hörsystem (2) zur Unterstützung des Hörvermögens eines Nutzers angegeben, das zwei jeweils in oder an einem Ohr des Nutzers getragene Hörinstrumente (4a,4b) aufweist, wobei in jedem der beiden Hörinstrumente (4a, 4b) ein Audiosignal (I) mittels eines programmierbaren Signalprozessors (12a, 12b) des jeweiligen Hörinstruments (4a,4b) durch Ausführung einer Mehrzahl von Softwaremodulen (32,34,36,38,40,42,44,46,48,50,54) einer Firmware (30) des Hörsystems (2) modifiziert und mittels eines Ausgangswandlers (8a,8b) des jeweiligen Hörinstruments (4a,4b) ausgegeben wird. Die ausgeführten Softwaremodule (32,34,36,38,40,42,44,46,48,50,54) der Firmware (30) werden dabei asymmetrisch auf die beiden Hörinstrumente (4a,4b) verteilt, so dass mindestens eines der Softwaremodule (40, 42,44,46,48,50,54) der Firmware (30) selektiv in einem der beiden Hörinstrumente (4a,4b) ausgeführt wird.

## Beschreibung

Die Erfindung bezieht sich auf ein Verfahren zum Betrieb eines binauralen Hörsystems zur Unterstützung des Hörvermögens eines Nutzers, mit zwei im oder am Ohr des Nutzers getragenen Hörinstrumenten. Die Erfindung bezieht sich weiterhin auf ein solches binaurales Hörsystem.

Als Hörinstrument wird allgemein ein elektronisches Gerät bezeichnet, dass das Hörvermögen einer das Hörinstrument tragenden Person (die nachfolgend als "Träger" oder "Nutzer" bezeichnet ist) unterstützt. Insbesondere bezieht sich die Erfindung auf Hörinstrumente, die dazu eingerichtet sind, einen Hörverlust eines hörgeschädigten Nutzers ganz oder teilweise zu kompensieren. Ein solches Hörinstrument wird auch als "Hörgerät" bezeichnet. Daneben gibt es Hörinstrumente, die das Hörvermögen von normalhörenden Nutzern schützen oder verbessern, zum Beispiel in komplexen Hörsituationen ein verbessertes Sprachverständnis ermöglichen sollen.

Hörinstrumente im Allgemeinen, und Hörgeräte im Speziellen, sind meist dazu ausgebildet, im oder am Ohr des Nutzers getragen zu werden, insbesondere als Hinter-dem-Ohr-Geräte (nach dem englischen Begriff "behind the ear" auch als BTE-Geräte bezeichnet) oder In-dem-Ohr-Geräte (nach dem englischen Begriff "in the ear" auch als ITE-Geräte bezeichnet). Im Hinblick auf ihre interne Struktur weisen Hörinstrumente regelmäßig mindestens einen (akusto-elektrischen) Eingangswandler, eine Signalverarbeitungseinheit (Signalprozessor) und einen Ausgangswandler auf. Im Betrieb des Hörinstruments nimmt der Eingangswandler einen Luftschall aus der Umgebung des Hörinstruments auf und wandelt diesen Luftschall in ein Eingangs-Audiosignal (d.h. ein elektrisches Signal, dass eine Information über den Umgebungsschall transportiert) um. Dieses Eingangs-Audiosignal ist nachfolgend auch als "aufgenommenes Schallsignal" bezeichnet. In der Signalverarbeitungseinheit wird das Eingangs-Audiosignal verarbeitet (d.h. hinsichtlich seiner Schallinformation modifiziert), um das Hörvermögen des Nutzers zu unterstützen, insbesondere um einen Hörverlust des Nutzers auszugleichen. Die Signalverarbeitungseinheit gibt ein entsprechend verarbeitetes Audiosignal (auch als "Ausgangs-Audiosignal" oder "modifiziertes Schallsignal" bezeichnet) an den Ausgangswandler aus. In den meisten Fällen ist der Ausgangswandler als elektro-akustischer Wandler ausgebildet, der das (elektrische) Ausgangs-Audiosignal wieder in einen Luftschall umwandelt, wobei dieser - gegenüber dem Umgebungsschall modifizierte - Luftschall in den Gehörgang des Nutzers abgegeben wird. Bei einem hinter dem Ohr getragenen Hörinstrument ist der auch als "Hörer" ("Receiver") bezeichnete Ausgangswandler meist außerhalb des Ohrs in einem Gehäuse des Hörinstruments integriert. Der von dem Ausgangswandler ausgegebene Schall wird in diesem Fall mittels eines Schallschlauchs in den Gehörgang des Nutzers geleitet. Alternativ hierzu kann der Ausgangswandler auch in dem Gehörgang, und somit außerhalb des hinter dem Ohr getragenen Gehäuses, angeordnet sein. Solche Hörinstrumente werden (nach dem englischen Begriff "receiver in canal") auch als RIC-Geräte bezeichnet. Im Ohr getragene Hörinstrumente, die so klein dimensioniert sind, dass sie nach außen über den Gehörgang nicht hinausstehen, werden (nach dem englischen Begriff "completely in canal") auch als CIC-Geräte bezeichnet.

In weiteren Bauformen kann der Ausgangswandler auch als elektro-mechanischer Wandler ausgebildet sein, der das Ausgangs-Audiosignal in Körperschall (Vibrationen) umwandelt, wobei dieser Körperschall zum Beispiel in den Schädelknochen des Nutzers abgegeben wird. Ferner gibt es implantierbare Hörinstrumente, insbesondere Cochlear-Implantate, und Hörinstrumente, deren Ausgangswandler den Hörnerv des Nutzers direkt stimulieren.

Der Begriff "binaurales Hörsystem" bezeichnet eine Gruppe von zwei Hörinstrumenten, die zur Versorgung der beiden Ohren des Nutzers zusammenwirken. Zusätzlich zu diesen beiden Hörinstrumenten kann ein solches binaurales Hörsystem optional ein oder mehrere weitere elektronische Geräte umfassen, zum Beispiel eine Fernbedienung, ein Ladegerät oder ein Programmiergerät für die Hörinstrumente. Bei modernen Hörsystemen ist oft anstelle einer Fernbedienung oder eines dedizierten Programmiergerätes ein Steuerprogramm, insbesondere in Form einer sogenannten App, vorgesehen, wobei dieses Steuerprogramm zur Implementierung auf einem externen Computer, insbesondere einem Smartphone oder Tablet, ausgebildet ist. Der externe Computer ist dabei regelmäßig selbst kein Teil des Hörsystems und wird insbesondere in der Regel auch nicht von dem Hersteller des Hörsystems bereitgestellt.

Die Modifikation des Eingangs-Audiosignals erfolgt in modernen Hörinstrumenten regelmäßig mittels digitaler Signalverarbeitungsalgorithmen. Dabei werden meist Signalprozessoren eingesetzt, die zumindest eine programmierbare Untereinheit aufweisen, in der die Signalverarbeitung durch Software (also durch Ausführung eines Computerprogramms) erfolgt. Die in den Hörinstrumenten installierte Software (auch als "Firmware" bezeichnet) ist regelmäßig in eine Mehrzahl von Softwaremodulen, d.h. in mehrere funktionale Einheiten, die jeweils eine bestimmte Funktion erfüllen, gegliedert. Je nach Art der Programmierung können diese Softwaremodule in verschiedener Form, z.B. als Unterprogramme (auch: Procedures, Subroutines oder Funktionen), Objekte bzw. Klassen im Sinne einer objektorientierten Programmierung, Komponenten im Rahmen eines Komponentenmodells und/oder als Plug-ins, etc. vorliegen.

Die fortschreitende Entwicklung von Hörsystemen resultiert dem Bedürfnis, eine wachsende Anzahl von teils numerisch aufwändigen und/oder speicherplatz-intensiven Softwaremodulen in den Hörinstrumenten eines Hörsystems zu integrieren. Dies kollidiert mit dem Umstand, dass die von den Softwaremodulen in Anspruch genommenen Ressourcen, nämlich die verfügbare Rechenleistung, der verfügbare (temporäre und persistente) Speicherplatz und die zu Verfügung stehende elektrische Energie, in Hörinstrumenten - bei denen es sich zweckbedingt stets um kleine, batteriebetriebene Geräte handelt - nur in stark eingeschränktem Maße zur Verfügung stehen.

Der Erfindung liegt daher die Aufgabe zugrunde, ein binaurales Hörsystem besonders ressourcensparend auszugestalten.

Bezüglich eines Verfahrens zum Betrieb eines binauralen Hörsystems wird diese Aufgabe erfindungsgemäß gelöst durch die Merkmale des Anspruchs 1. Bezüglich eines binauralen Hörsystems wird die Aufgabe erfindungsgemäß gelöst durch die Merkmale des Anspruchs 6. Vorteilhafte und teils für sich gesehen erfinderische Ausgestaltungen oder Weiterentwicklungen der Erfindung sind in den Unteransprüchen und der nachfolgenden Beschreibung dargelegt.

Die Erfindung geht allgemein aus von einem binauralen Hörsystem, wobei das Hörsystem zwei jeweils in oder an einem Ohr des Nutzers getragene Hörinstrumente (ein erstes Hörinstrument für das linke Ohr des Nutzers und ein zweites Hörinstrument für das rechte Ohr des Nutzers) aufweist. Jedes der beiden Hörinstrumente des Hörsystems weist jeweils zumindest einen Signalprozessor, einen Ausgangswandler und eine Datenübertragungseinheit zum (insbesondere drahtlosen) Datenaustausch mit dem jeweils anderen Hörinstrument auf. Die beiden Signalprozessoren dienen zur Modifikation eines Audiosignals zur Unterstützung des Hörvermögens eines Nutzers. Die Signalprozessoren sind programmierbar und verfügen somit jeweils über eine programmgesteuerte Recheneinheit, z.B. in Form einer CPU, sowie - als integrierte oder externe Komponente - über mindestens einen Datenspeicher. Vorzugsweise verfügen die Signalprozessoren hierbei jeweils über einen flüchtigen Arbeitsspeicher, insbesondere in Form eines RAM, zur temporären Speicherung der im Betrieb des Hörsystems jeweils benötigten Programm- und Audiodaten sowie weiter bevorzugt auch einen nichtflüchtigen Speicher, z.B. in Form eines EEPROM, zur persistenten Speicherung von Programmdaten. Optional enthalten die Signalprozessoren zusätzlich auch eine nichtprogrammierbare Funktionseinheit, z.B. in Form eines ASIC. Jedes Hörinstrument des Hörsystems ist zweckmäßigerweise durch eine Batterie spannungsversorgt. Zusätzlich weist jedes Hörinstrument zweckmäßigerweise mindestens einen Eingangswandler auf.

Bei den Eingangswandlern des Hörsystems handelt es sich insbesondere um akusto-elektrische Wandler, die einen Luftschall aus der Umgebung in (von den Signalprozessoren zu verarbeitende) elektrische Eingangs-Audiosignale umwandeln. Die Ausgangswandler sind vorzugsweise als elektro-akustische Wandler (Hörer) ausgebildet, die das von der zugeordneten Signalverarbeitungseinheit modifizierte Audiosignal in einen Luftschall umwandeln. Alternativ sind die Ausgangswandler zur Abgabe eines Körperschalls oder zur direkten Stimulierung des Hörnervs des Nutzers ausgebildet. Die Ausgangswandler sind jeweils mit dem Signalprozessor des zugeordneten Hörinstruments verschaltet, um das modifizierte Audiosignal auszugeben.

Die beiden Hörinstrumente des Hörsystems sind vorzugsweise hinsichtlich ihrer Hardware-Struktur gleichartig, insbesondere spiegelsymmetrisch aufgebaut. Die Signalprozessoren der beiden Hörinstrumente, sowie optional auch die Eingangswandler, Ausgangswandler, Datenübertragungseinheiten, Batterien und/oder sonstige Hardware-Komponenten (wie z.B. etwaige Sensoren), sind vorzugsweise baugleich (d.h. hinsichtlich Aufbau und Typ identisch, insbesondere austauschbar) oder spiegelsymmetrisch.

Die beiden Hörinstrumente des Hörsystems liegen insbesondere in einer der eingangs beschriebenen Bauformen (BTE-Gerät mit internem oder externen Ausgangswandler, ITE-Gerät, z.B. CIC-Gerät, Hörimplantat, insbesondere Cochlear-Implantat, etc.) vor. Auch hinsichtlich der äußeren Form sind die beiden Hörinstrumente vorzugsweise gleichartig und insbesondere spiegelsymmetrisch ausgebildet.

Das Hörsystem umfasst weiterhin eine (nachfolgend als "Firmware" bezeichnete) Software, die eine Mehrzahl von Softwaremodulen der vorstehend beschriebenen Art umfasst. Die Softwaremodule sind dabei in den Signalprozessoren der beiden Hörinstrumente ausführbar, um die Audiosignale (insbesondere die von den Eingangswandlern erzeugten Eingangs-Audiosignale) zu modifizieren oder um eine sonstige für den Betrieb des jeweiligen Hörinstruments erforderliche Funktion zu erfüllen.

Die in den Softwaremodulen der Firmware implementierten Signalverarbeitungsfunktionen zur Modifikation des Audiosignals umfassen insbesondere frequenzselektive Verstärkung, dynamische Kompression, spektrale Kompression, richtungsabhängige Dämpfung (Beamforming), Störgeräuschunterdrückung (insbesondere aktive Störgeräuschunterdrückung bzw. Active Noise Cancellation, kurz ANC), aktive Rückkopplungsunterdrückung (Active Feedback Cancellation, kurz AFC), Windgeräuschunterdrückung, Sprachaktivitätserkennung und/oder Stimmerkennung.

Vorzugsweise umfasst die Firmware weiterhin mindestens ein weiteres Softwaremodul, das nicht unmittelbar der Verarbeitung von Audiosignalen dient, aber eine Hilfs- oder Infrastrukturfunktionalität für die Audiosignalverarbeitung zur Verfügung stellt. Solche Hilfsfunktionalitäten umfassen beispielsweise eine Klassifikation der akustischen Umgebung durch Auswertung der Audiosignale, um abhängig davon die Signalverarbeitung einzustellen oder die Verarbeitung von Sensorsignalen (z.B. Signalen eines Accelerometers, Gyorscopes, Magnetometers, GPS-Sensors, Pulsmessers, Thermometers, etc.), die Steuerung von Funktionen zur Interaktion mit dem Nutzer, etc. Infrastruktur-Funktionalitäten umfassen beispielsweise Funktionen eines Betriebssystems des jeweiligen Signalprozessors, Funktionen zur Installation von Firmware-Updates, Funktionen zur Aufzeichnung von Nutzungsdaten (Data Logging), Funktionen zur Ansteuerung der Datenübertragungseinheit, etc.

Verfahrensgemäß wird im Betrieb des Hörsystems ein Audiosignal mittels des Signalprozessors des jeweiligen Hörinstruments modifiziert, wobei das modifizierte Audiosignal mittels des Ausgangswandlers des jeweiligen Hörinstruments ausgegeben wird. Die hierzu in den Signalprozessoren ausgeführten Softwaremodule der Firmware werden dabei asymmetrisch auf die beiden Hörinstrumente verteilt, so dass mindestens eines der Softwaremodule der Firmware selektiv in einem der beiden Hörinstrumente ausgeführt wird. Unter dem Begriff "selektive Ausführung eines Softwaremoduls" wird hier und im Folgenden verstanden, dass das betreffende Softwaremodul ausschließlich in einem der beiden Hörinstrumente ausgeführt wird, während in dem anderen Hörinstrument weder ein gleiches Softwaremodul noch ein die gleiche Funktion erfüllendes anderes Softwaremodul ausgeführt wird. Vorzugsweise werden Arbeitsergebnisse und/oder Zustände dieses selektiv auf einem der beiden Hörinstrumente ausgeführten Softwaremoduls auf das andere Hörinstrument übertragen.

Erfindungsgemäß wird von dem üblichen Paradigma der Hörsystemprogrammierung abgewichen, wonach in beiden Hörinstrumenten eines binauralen Hörsystems Softwaremodule zur Erfüllung der gleichen Funktionen parallel (und somit doppelt) implementiert werden. Durch die erfindungsgemäß asymmetrische Verteilung der Softwaremodule werden redundant auf beiden Hörinstrumenten ausgeführte Rechenoperationen (gänzlich oder teilweise) vermieden, wodurch sowohl Rechenleistung sowie Speicher- und Energiebedarf eingespart werden. Dies erlaubt einerseits, eine Firmware eines gegebenen Funktionsumfangs mit vergleichsweise gering dimensionierten Ressourcen (Rechenleistung, temporärem oder persistentem Speicherplatz und/oder elektrischer Energie) des Hörinstruments auszuführen, was wiederum eine besonders kleine Realisierung der Hörinstrumente ermöglicht. Andererseits lässt sich in einem Hörsystem mit gegebenen Ressourcen eine Firmware mit besonders großem Funktionsumfang implementieren.

Die auszuführenden Softwaremodule der Firmware werden dabei zumindest zu einem bestimmten Anteil dynamisch auf die beiden Hörinstrumente verteilt. Konkret kann hierbei mindestens eines der Softwaremodule der Firmware auf jedem der beiden Hörinstrumente ausgeführt werden. Im Zuge der dynamischeen Verteilung dieses mindestens einen Softwaremoduls wird beim Start oder im Betrieb des Hörsystems eines der beiden Hörinstrumente ausgewählt, und dieses Softwaremodul dann selektiv auf dem ausgewählten Hörinstrument ausgeführt. Mit anderen Worten wird beim Start oder im Betrieb des Hörsystems dynamisch ausgewählt, auf welchem der beiden Hörinstrumente das mindestens eine zu verteilende Softwaremodul ausgeführt werden soll. Aufgrund dieser Auswahl wird die Ausführung des mindestens einen zu verteilende Softwaremoduls selektiv (also nur) auf dem ausgewählten Hörinstrument veranlasst. Der Begriff "dynamisch" bedeutet hierbei, dass die beschriebene Auswahl über die Zeit veränderlich ist. Es wird also für die Ausführung des mindestens einen zu verteilenden Softwaremoduls nicht stets dasselbe Hörinstrument ausgewählt, sondern die Hörinstrumente wechseln sich bei der Ausführung dieses Softwaremoduls ab. Dieser Wechsel kann entweder im laufenden Betrieb des Hörsystems erfolgen oder zwischen aufeinander folgenden Betriebsphasen, zwischen denen das Hörsystem ausgeschaltet war

Diese dynamische Verteilung erfolgt in einer vorteilhaften Ausführungsform in Abhängigkeit der jeweiligen Batterieladung der beiden Hörinstrumente. Hierbei wird beispielsweise aus der jeweiligen Batterieladung für jedes Hörinstrument unter Berücksichtigung des Energieverbrauchs (d.h. der elektrischen Leistung) der darauf ausgeführten oder auszuführenden Softwaremodule eine zu erwartende Restbetriebszeit bis zur Erschöpfung der Batterie bestimmt, und jeweils dasjenige Hörinstrument mit der höheren Restbetriebszeit für das selektiv auszuführende Softwaremodul ausgewählt.

Vorzugweise werden mehrere Softwaremodule der Firmware zur jeweils selektiven Ausführung auf die beiden Hörinstrumente verteilt. Diese Softwaremodule werden dabei insbesondere derart verteilt, dass die jeweilige Restbetriebszeit der beiden Hörinstrumente bis zur Erschöpfung der jeweiligen Batterieladung aneinander angeglichen wird. Die vorhanden energetischen Ressourcen des Hörsystems werden so besonders gut genutzt. Einem vorzeitigen Ausfall eines einzelnen Hörinstruments aufgrund entladener Batterie wird somit entgegengewirkt. Mit anderen Worten wird eine besonders hohe Gesamtlaufzeit des aus den beiden Hörinstrumenten gebildeten Hörsystems erzielt.

Zusätzlich oder alternativ hierzu erfolgt die dynamische Verteilung nach Maßgabe der jeweils benötigten Rechenleistung und/oder des jeweils benötigten Arbeitsspeicherplatzes der auszuführenden Softwaremodule. Diese Vorgehensweise ist dann besonders vorteilhaft, wenn die Firmware im Betrieb des Hörsystems einen zeitlich schwankenden Bedarf an Rechenleistung und/oder Arbeitsspeicher aufweist; z.B. wenn zumindest eines der Softwaremodule der Firmware nicht ununterbrochen, sondern nur zeitweise ausgeführt wird oder wenn zumindest eines der Softwaremodule ein variierendes Maß an Rechenleistung und/oder Arbeitsspeicherplatz benötigt. Die dynamische Verteilung erfolgt dabei insbesondere derart, dass der Bedarf an Rechenleistung und/oder Arbeitsspeicherplatz für die auf beiden Hörinstrumenten jeweils ausgeführten Softwaremodule aneinander angeglichen wird, dass also beide Hörinstrumente näherungsweise gleich belastet sind.

Das erfindungsgemäße Hörsystem ist allgemein zur automatischen Durchführung des vorstehend beschriebenen erfindungsgemäßen Verfahrens eingerichtet. Die Softwaremodule der Firmware sind somit asymmetrisch auf die beiden Hörinstrumente verteilt oder verteilbar, so dass im Betrieb des Hörsystems mindestens eines der Softwaremodule der Firmware selektiv in einem der beiden Hörinstrumente ausgeführt wird. Das oder jedes selektiv auf nur einem Hörinstrument ausgeführte Softwaremodul ist vorzugsweise dazu eingerichtet, Arbeitsergebnisse und/oder Zustände mittels der Datenübertragungseinheit des zugeordneten Hörinstruments auf das andere Hörinstrument zu übertragen.

Die vorstehend beschriebenen Ausführungsformen des erfindungsgemäßen Verfahrens korrespondieren mit entsprechenden Ausführungsformen des erfindungsgemäßen Hörsystems. Die vorstehenden Ausführungen zu dem erfindungsgemäßen Verfahren sind entsprechend auf das erfindungsgemäße Hörsystem übertragbar und umgekehrt. In einer Ausführung weist das Hörsystem insbesondere eine Verteilungseinheit auf, die dazu eingerichtet ist, mindestens eines der Softwaremodule der Firmware in der vorstehend beschriebenen Weise dynamisch zu verteilen, also dieses Softwaremodul beim Start oder im Betrieb des Hörsystems einem der Hörinstrumente zur Ausführung selektiv zuzuweisen. Die Verteilungseinheit kann grundsätzlich im Rahmen der Erfindung als (nicht-programmierbarer) elektronischer Schaltkreis ausgeführt sein. Vorzugsweise ist die Verteilungseinheit aber durch eines der Softwaremodule der Firmware gebildet.

Nachfolgend werden Ausführungsbeispiele der Erfindung anhand einer Zeichnung näher erläutert. Darin zeigen:

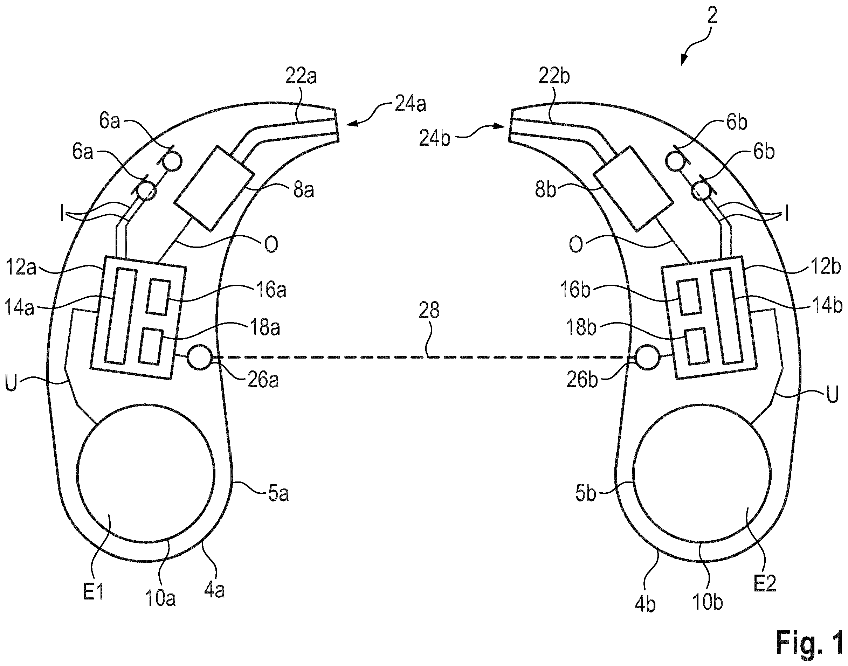

- Fig. 1: in einer schematischen Darstellung ein aus zwei Hörinstrumenten gebildetes binaurales Hörsystem, wobei jedes der beiden Hörinstrumente einen Signalprozessor mit einer programmgesteuerten Recheneinheit, einem Arbeitsspeicher und einem persistenten Speicher aufweist,

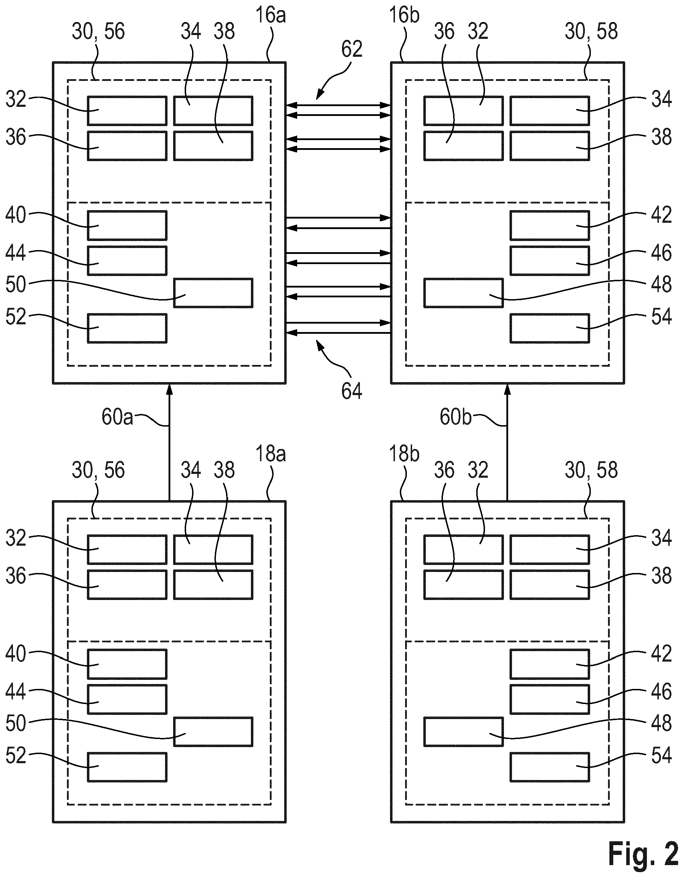

- Fig. 2: in einer schematischen Darstellung für jedes der beiden Hörinstrumente den Arbeitsspeicher und den persistenten Speicher sowie eine aus mehreren Softwaremodulen gebildete Firmware des Hörsystems, wobei ein Teil der Softwaremodule der Firmware statisch asymmetrisch auf die beiden Hörinstrumente verteilt ist, um jeweils selektiv auf einem der beiden Hörinstrumente ausgeführt zu werden, und

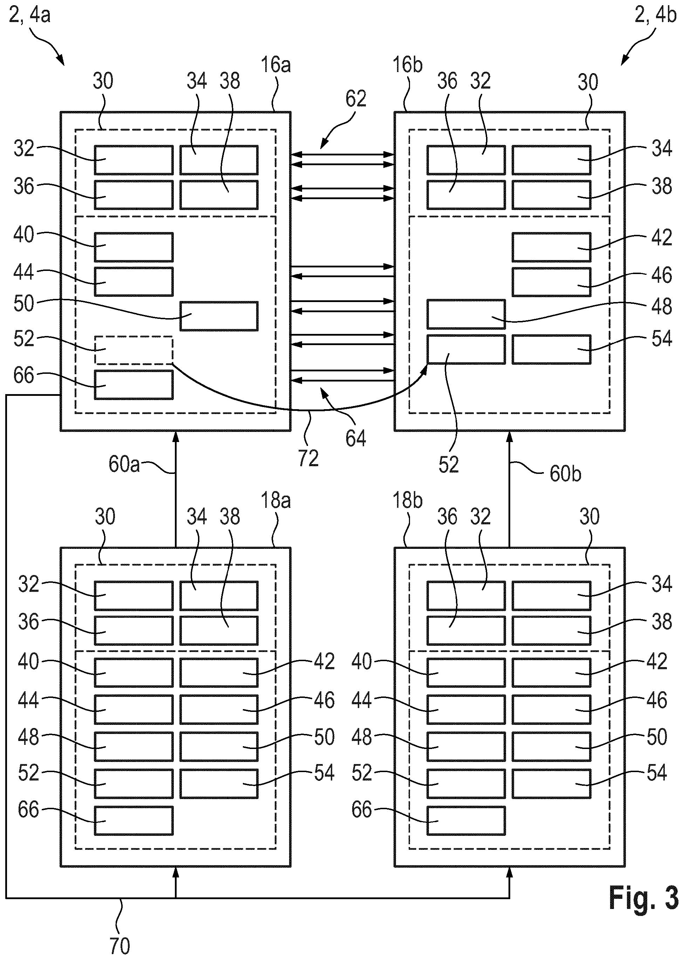

- Fig. 3: in Darstellung gemäß Fig. 2 eine alternative Ausführung des Hörsystems, wobei ein Teil der Softwaremodule mittels einer Verteilungseinheit beim Start oder im Betrieb des Hörsystems dynamisch asymmetrisch auf die beiden Hörinstrumente verteilt wird, um jeweils selektiv auf einem der beiden Hörinstrumente ausgeführt zu werden.

Einander entsprechende Teile und Größen sind in allen Figuren stets mit gleichen Bezugszeichen versehen.

Fig. 1 zeigt ein binaurales Hörsystem 2 zur Unterstützung des Hörvermögens eines Nutzers. Das Hörsystem 2 umfasst zwei Hörinstrumente 4a und 4b zur Versorgung des linken bzw. rechten Ohrs des Nutzers. Bei den Hörinstrumenten 4a und 4b handelt es sich in dem hier dargestellten Beispiel jeweils um hinter dem jeweiligen Ohr des Nutzers tragbare BTE-Hörinstrumente. In der bevorzugten Anwendung handelt es sich bei den Hörinstrumenten 4a und 4b um Hörgeräte, die zur zumindest teilweisen Kompensation einer Hörschädigung des Nutzers eingerichtet sind.

Jedes der beiden Hörinstrumente 4a und 4b umfasst innerhalb eines Gehäuses 5a bzw. 5b mindestens ein Mikrofon 6a bzw. 6b (im dargestellten Beispiel jeweils zwei Mikrofone 6a bzw. 6b) als Eingangswandler sowie einen Hörer 8a bzw. 8b (Receiver) als Ausgangswandler. Jedes Hörinstrument 4a, 4b umfasst weiterhin eine Batterie 10a bzw. 10b und eine Signalverarbeitungseinheit in Form eines digitalen Signalprozessors 12a bzw. 12b. Jeder der beiden Signalprozessoren 12a, 12b weist eine programmierbare Recheneinheit (nachfolgend als CPU 14a bzw. 14b bezeichnet) auf und verfügt über einen flüchtigen Arbeitsspeicher in Form eines RAM 16a bzw. 16b sowie über einen nicht-flüchtigen (persistenten) Speicher in Form eines EEPROM 18a bzw. 18b. Der RAM 16a, 16b und/oder der EEPROM 18a, 18b sind mit der CPU 14a, 14 dabei vorzugsweise in einem Bauteil integriert. Die CPU 14a, 14b und der jeweils zugehörige RAM 16a bzw. 16 und/oder der jeweils zugehörige EEPROM 18a bzw. 18b können alternativ aber auch als separate Baueinheiten vorliegen.

Der Signalprozessor 12a, 12b wird aus der Batterie 10a, 10b jeweils mit einer elektrischen Versorgungsspannung U versorgt.

Im Normalbetrieb der Hörinstrumente 4a, 4a nehmen die Mikrofone 6a, 6b jeweils einen Luftschall aus der Umgebung des jeweiligen Hörinstruments 4a, 4b auf. Die Mikrofone 6a, 6b wandeln den Schall in ein elektrisches (Eingangs-)Audiosignal I um, das Information über den aufgenommenen Schall enthält. Das Eingangs-Audiosignal I wird innerhalb des Hörinstruments 4a, 4b dem Signalprozessor 12a, 12b zugeführt.

Die Signalprozessoren 12a und 12b verarbeiten die Eingangs-Audiosignale I in nachstehend näher beschriebener Weise, um den Hörverlust des Nutzers zu kompensieren. Jeder Signalprozessor 12a, 12b gibt ein Ausgangs-Audiosignal O, das Information über den verarbeiteten und somit modifizierten Schall enthält, an den Hörer 8a, 8b des jeweiligen Hörinstruments 4a, 4b aus. Der Hörer 8a, 8b wandelt das Ausgangs-Schallsignal O in einen modifizierten Luftschall um. Dieser modifizierte Luftschall wird über einen Schallkanal 22a bzw. 22b, der den Hörer 8a, 8b mit einer Spitze 24a,24b des Gehäuses 5a,5b verbindet, sowie über einen (nicht explizit gezeigten) flexiblen Schallschlauch, der die Spitze 24a,24b mit einem in den zugeordneten Gehörgang des Nutzers eingesetzten Ohrstück verbindet, in diesen Gehörgang des Nutzers übertragen.

Jedes der beiden Hörinstrumente 4a, 4b umfasst weiterhin eine Datenübertragungseinheit, z.B. in Form einer magnetisch-induktiven Sende-Empfangseinheit (nachfolgend als MI-Transceiver 26a, 26b bezeichnet). Im Betrieb des Hörsystems 2 tauschen die Signalprozessoren 12a und 12b über die MI-Transceiver 26a, 26b und eine zwischen diesen MI-Transceivern 26a, 26b aufgebaute drahtlose Datenübertragungsverbindung 28 Daten aus und wirken hierbei bei der Verarbeitung der Eingangs-Audiosignale I zusammen.

Die Signalprozessoren 12a und 12b der beiden Hörinstrumente 4a und 4b sind baugleich. Ebenso sind auch die anderen einander entsprechenden Hardware-Komponenten der Hörinstrumente 4a und 4b, insbesondere die Eingangswandler 6a und 6b, die Ausgangswandler 8a und 8b, die Batterien 10a und 10b und die MI-Transceiver 26a und 26b, jeweils baugleich oder spiegelsymmetrisch zueinander ausgeführt.

In den Signalprozessoren 12a und 12b wird die Verarbeitung der Eingangs-Audiosignale I durch eine in Fig. 2 vereinfacht veranschaulichte Firmware 30 gesteuert, die in eine Mehrzahl von in den Hörinstrumenten 4a und 4b lauffähig installierten Softwaremodulen gegliedert ist. Der Begriff "Firmware" bezeichnet dabei übergreifend die Gesamtheit der in den beiden Hörinstrumenten 4a und 4b installierten Softwaremodule. Die einzelnen Softwaremodule bilden jeweils abgegrenzte Untereinheiten der Firmware 30, beispielsweise in Form von einzelnen Objekten oder Komponenten. Jedes Softwaremodul implementiert hierbei eine spezifische Funktion im Zusammenhang mit der Verarbeitung der Eingangs-Audiosignale oder eine andere für den ordnungsgemäßen Betrieb der Hörinstrumente 4a und 4b benötigte Funktion, insbesondere eine Hilfsfunktion für die Audiosignalverarbeitung oder eine Infrastrukturfunktion wie vorstehend beschrieben.

Die Firmware 30 umfasst im Einzelnen eine Anzahl von Softwaremodulen (im Beispiel gemäß Fig. 2 die Softwaremodule 32, 34, 36, 38), die zweifach, nämlich in einer ersten Instanz in dem Hörinstrument 4a und in einer zweiten Instanz in dem Hörinstrument 4b installiert sind. Diese Softwaremodule 32-38 bilden beispielsweise
- ein Betriebssystem für den jeweiligen Signalprozessor 12a bzw.12b,
- eine Funktion zur frequenzselektiven Verstärkung des jeweiligen Eingangs-Audiosignals I in Abhängigkeit von Audiogrammdaten, die den Hörverlust des Nutzers charakterisieren; die beiden in dem Hörinstrument 4a bzw. in dem Hörinstrument 4b installierten Instanzen des betreffenden Softwaremoduls sind dabei unterschiedlich, nämlich mit den Audiogrammdaten für das jeweils zugeordnete Ohr des Nutzers, parametriert,
- eine Funktion zur dynamischen Kompression des jeweiligen Eingangs-Audiosignals I; auch in diesem Fall sind vorzugsweise die beiden Instanzen des betreffenden Softwaremoduls (in einer für den Hörverlust des linken Ohrs bzw. den Hörverlust des rechten Ohr des Nutzers jeweils angepassten Weise) unterschiedlich parametriert,
- eine Funktion zur Ermittlung des Ladezustands der jeweiligen Batterie 10a bzw. 10b,
- etc.

Die Firmware 30 umfasst des Weiteren mehrere Softwaremodule (im Beispiel gemäß Fig. 2 die Softwaremodule 40, 42, 44, 46, 48, 50, 52 und 54), die lediglich einfach, nämlich entweder in dem Hörinstrument 4a oder in dem Hörinstrument 4b, installiert sind. In dem dargestellten Beispiel sind die Softwaremodule 40, 44, 50 und 52 lediglich in dem Hörinstrument 4a installiert, während die Softwaremodule 42, 46, 48 und 54 lediglich in dem Hörinstrument 4b installiert sind. Die Softwaremodule 40, 42, 44, 46, 48, 50, 52 und 54 sind mit anderen Worten asymmetrisch auf die Hörinstrumente 4a und 4b verteilt. Diese Verteilung ist in dem Beispiel gemäß Fig. 2 statisch und wird im Entwicklungsstadium der Firmware 30 herstellerseitig festgelegt. Die Firmware 30 ist somit in zwei unveränderliche Untergruppen 56 und 58 gegliedert, von denen die Untergruppe 56 (umfassend die Softwaremodule 32, 34, 36, 38, 40, 44, 50 und 52) dem linken Hörinstrument 4a und die Untergruppe 58 (umfassend die Softwaremodule 32, 34, 36, 38, 42, 46, 48 und 54) dem rechten Hörinstrument 4b zugeordnet ist.

Die asymmetrisch verteilten Softwaremodule 40-54 bilden beispielsweise
- eine Funktion zur Erkennung einer Gehbewegung durch Analyse der Eingangs-Audiosignale I mindestens eines der Hörinstrumente 4a, 4b und/oder ggf. durch Analyse der Signale eines internen oder externen Bewegungssensors,
- eine Funktion zur Ermittlung eines Aktivitätsgrads des Nutzers durch Analyse der Eingangs-Audiosignale I mindestens eines der Hörinstrumente 4a, 4b und/oder ggf. durch Analyse der Signale eines internen oder externen Bewegungssensors,
- eine Funktion zur Klassifizierung einer Hörsituation durch Analyse der Eingangs-Audiosignale I mindestens eines der Hörinstrumente 4a, 4b,
- eine Funktion zur statistischen Erfassung von Charakteristika der akustischen Umgebung des Nutzers auf langer Zeitskala (z.B. zur Erfassung der Hintergrundgeräuschs) durch Analyse der Eingangs-Audiosignale I mindestens eines der Hörinstrumente 4a, 4b,
- eine Funktion zur Erkennung einer Kopfdrehung des Nutzers durch Analyse der Eingangs-Audiosignale I mindestens eines der Hörinstrumente 4a, 4b und/oder ggf. durch Analyse der Signale eines internen oder externen Bewegungssensors,
- eine Funktion zur Ermittlung der Nachhalldauer durch Analyse der Eingangs-Audiosignale I mindestens eines der Hörinstrumente 4a, 4b,
- etc.

Die Untergruppen 56 und 58 sind vorzugsweise derart zusammengestellt, dass die darin jeweils enthaltenen Softwaremodule im Betrieb des Hörsystems 2 jeweils in Summe einen näherungsweise gleichen Bedarf an elektrischer Leistung, Rechenleistung und/oder Arbeitsspeicher aufweisen.

In Fig. 2 sind beispielhaft für jedes Hörinstrument 4a und 4b der EEPROM 18a und 18b sowie der RAM 16a und 16b dargestellt. Aus dieser Darstellung ist ersichtlich, dass in dem EEPROM 18a und 18b eines jeden Hörinstruments 4a bzw. 4b nur die Softwaremodule der jeweils zugeordneten Untergruppe 56 bzw. 58 persistent gespeichert sind. Die beiden Untergruppe 56 bzw. 58 sind zudem derart gewählt, dass sie einen annähernd gleichen persistenten Speicherplatz auf dem jeweils zugeordneten Hörinstrument 4a bzw. 4b benötigen.

Nach dem Einschalten des Hörinstruments 4a werden die Softwaremodule 32, 34, 36, 38, 40, 44, 50 und 52 der Untergruppe 56 aus dem EEPROM 18a in den RAM 16a geladen (was in Fig. 2 durch einen Pfeil 60a angedeutet ist) und in der CPU 14a ausgeführt. Ebenso werden nach dem Einschalten des Hörinstruments 4b die Softwaremodule 32, 34, 36, 38, 42, 46, 48 und 54 der Untergruppe 58 aus dem EEPROM 18b in den RAM 16b geladen (was in Fig. 2 durch einen Pfeil 60b angedeutet ist) und in der CPU 14b ausgeführt.

Im Betrieb der Hörinstrumente 4a und 4b tauschen die in beiden Hörinstrumenten 4a und 4b ausgeführten Softwaremodule 32-38 - sofern erforderlich - über die MI-Transceiver 26a, 26b und die Datenübertragungsverbindung 28 mit dem jeweils anderen Hörinstrument 4b bzw. 4a Daten aus, was in Fig. 2 durch Pfeile 62 veranschaulicht ist. Ebenso übermitteln die lediglich selektiv in einem der Hörinstrumente 4a oder 4b ausgeführten Softwaremodule 40-54 Daten (nämlich die von diesen Softwaremodulen 40-54 jeweils erzeugten Arbeitsergebnisse) über die MI-Transceiver 26a, 26b und die Datenübertragungsverbindung 28 an das jeweils andere Hörinstrument 4b bzw. 4a, was in Fig. 2 durch Pfeile 64 veranschaulicht ist.

In Fig. 3 ist eine alternative Ausführungsform des Hörsystems 2 dargestellt, in der - abweichend von der Ausführung gemäß Fig. 2 - die Softwaremodule 40-54 beim Start und im Betrieb des Hörsystems 2 dynamisch auf die Hörinstrumente 4a und 4b verteilt werden, um auf dem jeweils zugewiesenen Hörinstrument 4a, 4b selektiv ausgeführt zu werden. Im Gegensatz zu der statischen Verteilung gemäß Fig. 2 ist bei der dynamischen Verteilung gemäß Fig. 3 die Zuordnung der Softwaremodule 40-54 zu den Hörinstrumenten 4a und 4b nicht fest vorgegeben, sondern kann - insbesondere auch im laufenden Betrieb des Hörsystems 2 - geändert werden. Diese dynamische Verteilung wird durch ein weiteres Softwaremodul der Firmware 30 vorgenommen, das nachfolgend als Verteilungseinheit 66 bezeichnet ist.

Ebenfalls abweichend von der Ausführung gemäß Fig. 2 ist bei dem Hörsystem 2 gemäß Fig. 3 vorzugsweise jeweils die gesamte Firmware 30 sowohl in dem EEPROM 18a des Hörinstruments 4a als auch in dem EEPROM 18b des Hörinstruments 4b gespeichert, so dass keine Programmdaten von Softwaremodulen zwischen den Hörinstrumenten 4a und 4b übertragen werden müssen, um das jeweilige Softwaremodul zu starten. Alternativ kann die Firmware 30 allerdings auch in lediglich einem EEPROM 18a oder 18b gespeichert oder auf beide EEPROMs 18a und 18b verteilt sein.

Die Verteilungseinheit 66 wird vorzugsweise - analog zu den Softwaremodulen 40-54 - selektiv in einem der beiden Hörinstrumente 4a, 4b ausgeführt. Die Auswahl des Hörinstruments 4a, 4b, auf dem die Verteilungseinheit 66 ausgeführt werden soll, kann dabei herstellerseitig fest vorgegeben sein. Alternativ hierzu wird die Verteilungseinheit 66 stets auf demjenigen Hörinstrument 4a, 4b des Hörsystems 2 ausgeführt, das zuerst eingeschaltet wird.

Im Beispiel gemäß Fig. 3 wird die Verteilungseinheit 66 beispielhaft in dem Hörinstrument 4a ausgeführt. Nach dem Einschalten des Hörinstruments 4a wird somit zusätzlich zu den Softwaremodulen 32-38 auch die Verteilungseinheit 66 in den RAM 16a geladen. Nach dem Einschalten werden die Softwaremodule 40-54 durch die Verteilungseinheit 66 entweder nach einem fest vorgegebenen Schema oder in der zuletzt (vor dem vorherigen Ausschalten) eingestellten Weise auf die Hörinstrumente 4a und 4b verteilt. Hierzu veranlasst die Verteilungseinheit 66 (wie in Fig. 3 durch einen Pfeil 70 angedeutet ist), dass aus dem EEPROM 18a und dem EEPROM 18b die jeweils auf das Hörinstrument 4a bzw. das Hörinstrument 4b zu verteilenden Softwaremodule in den jeweils zugeordneten RAM 16a bzw. 16b geladen werden.

Während des Betriebs des Hörsystems 2 ermittelt die Verteilungseinheit 66 den Ladezustand der Batterien 10a, 10b der beiden Hörinstrumente 4a, 4b, berechnet hieraus - beispielsweise durch Extrapolation der zeitlichen Veränderung der Ladezustände - für jedes Hörinstrument 4a und 4b jeweils eine zu erwartende Restbetriebszeit bis zur Erschöpfung der jeweiligen Batterie 10a, 10b, und vergleicht diese Restbetriebszeiten.

Wenn die Verteilungseinheit 66 bei diesem Vergleich feststellt, dass die Restbetriebszeiten sich um mehr als einen vorgegebenen Schwellwert unterscheiden, verteilt die Verteilungseinheit 66 eines oder mehrere der Softwaremodule 40-54, die bisher auf dem Hörinstrument 4a, 4b mit der kürzeren Restbetriebszeit liefen, auf das Hörinstrument 4a, 4b mit der längeren Restbetriebszeit um. Die Verteilungseinheit 66 veranlasst hierzu einerseits, dass das oder jedes umzuverteilende Softwaremodul 40-54 in dem Hörinstrument 4a, 4b mit der längeren Restbetriebszeit aus dem dortigen EEPROM 18a, 18b in den jeweiligen RAM 16a, 16b geladen und ausgeführt wird und stoppt andererseits die Ausführung dieses Softwaremoduls 40-54 auf dem Hörinstrument 4a, 4b mit der kürzeren Restbetriebszeit. In Fig. 3 ist eine solche Umverteilung beispielhaft für das Softwaremodul 52 angedeutet, dessen Ausführung in diesem Beispiel - angedeutet durch einen Pfeil 72 - auf dem Hörinstrument 4a gestoppt und auf dem Hörinstrument 4b gestartet wird. Sofern erforderlich werden Zustände und/oder Parameterwerte des umzuverteilenden Softwaremoduls 40-54 (im Beispiel also des Softwaremoduls 52) von dem bisher zugewiesenen Hörinstrument 4a, 4b auf das künftig zugewiesene Hörinstrument 4a, 4b (im Beispiel also von dem Hörinstrument 4a auf das Hörinstrument 4b) übertragen, so dass das Softwaremodul 40-54 nach der Umverteilung die bisherige Funktion nahtlos, d.h. ohne Informationsverlust oder Änderungen der Eigenschaften, fortsetzen kann.

Das vorstehend beschriebene Verfahren wird durch die Verteilungseinheit 66 kontinuierlich oder in regelmäßigen oder unregelmäßigen Zeitabständen wiederholt.

Die Verteilungseinheit 66 verteilt dabei stets so viele der Softwaremodule 40-54 um, dass die Restlaufzeiten der beiden Hörinstrumente 4a und 4b aneinander angeglichen werden.

Somit wird die Verteilung der Softwaremodule 40-54 fortlaufend an sich ändernde Ladezustände der Batterien 10a, 10b angepasst. Auf diese Weise wird ein vorzeitiger Ausfall eines der Hörinstrumente 4a, 4b infolge entladener Batterie 10 a, 10 b vermieden und mithin erreicht, dass das Hörsystem 2 besonders lange genutzt werden kann, ohne die Batterien 10 a, 10 b auswechseln oder - wenn möglich - wiederaufladen zu müssen.

In weiterentwickelten Ausführungsformen des Hörsystems 2 wird die dynamische Verteilung der Softwaremodule 40-54 zusätzlich dahingehend optimiert, dass die Rechenleistung und/oder der Arbeitsspeicher, die bzw. der von den den Hörinstrumenten 4a, 4b jeweils zugeordneten Softwaremodulen jeweils benötigt wird, annähernd zwischen den Hörinstrumenten 4a, 4b angeglichen wird.

Die Erfindung wird an den vorstehend beschriebenen Ausführungsbeispielen besonders deutlich, ist gleichwohl auf diese Ausführungsbeispiele aber nicht beschränkt. Vielmehr können weitere Ausführungsformen der Erfindung von dem Fachmann aus den Ansprüchen und der vorstehenden Beschreibung abgeleitet werden.

### Bezugszeichenliste

- 2: Hörsystem
- 4a,4b: Hörinstrument
- 5a,5b: Gehäuse
- 6a,6b: Mikrofon
- 8a,8b: Hörer
- 10a,10b: Batterie
- 12a,12b: Signalprozessor
- 14a,14b: CPU
- 16a, 16b: RAM
- 18a,18b: EEPROM
- 22a,22b: Schallkanal
- 24a,24b: Spitze
- 26a,26b: MI-Transceiver
- 28: Datenübertragungsverbindung
- 30: Firmware
- 32: Softwaremodul
- 34: Softwaremodul
- 36: Softwaremodul
- 38: Softwaremodul
- 40: Softwaremodul
- 42: Softwaremodul
- 44: Softwaremodul
- 46: Softwaremodul
- 48: Softwaremodul
- 50: Softwaremodul
- 52: Softwaremodul
- 54: Softwaremodul
- 56: Untergruppe
- 58: Untergruppe
- 60a,60b: Pfeil
- 62: Pfeil
- 64: Pfeil
- 66: Verteilungseinheit
- 70: Pfeil
- 72: Pfeil

- I: Eingangs-Audiosignal
- O: Ausgangs-Audiosignal
- U: Versorgungsspannung

## Patentansprüche

1. Verfahren zum Betrieb eines binauralen Hörsystems (2) zur Unterstützung des Hörvermögens eines Nutzers, mit zwei jeweils in oder an einem Ohr des Nutzers getragenen Hörinstrumenten (4a,4b), wobei in jedem der beiden Hörinstrumente (4a,4b) ein Audiosignal (I) mittels eines programmierbaren Signalprozessors (12a, 12b) des jeweiligen Hörinstruments (4a,4b) unter Ausführung einer Mehrzahl von Softwaremodulen (32,34,36,38,40,42,44,46, 48,50,54) einer Firmware (30) des Hörsystems (2) modifiziert und mittels eines Ausgangswandlers (8a,8b) des jeweiligen Hörinstruments (4a,4b) ausgegeben wird, und wobei die ausgeführten Softwaremodule (32,34,36,38,40, 42,44,46,48,50,54) der Firmware (30) asymmetrisch auf die beiden Hörinstrumente (4a,4b) verteilt werden, so dass mindestens eines der Softwaremodule (40, 42,44,46,48,50,54) der Firmware (30) selektiv in einem der beiden Hörinstrumente (4a,4b) ausgeführt wird, wobei für mindestens eines der Softwaremodule (32,34,36,38,40,42,44,46, 48,50,54) der Firmware (30) beim Start oder im Betrieb des Hörsystems (2) dynamisch ausgewählt wird, auf welchem der beiden Hörinstrumente (4a,4b) dieses Softwaremodul (40,42,44,46,48,50,54) ausgeführt werden soll, und wobei dieses Softwaremodul (40,42,44,46,48,50,54) dann selektiv auf dem ausgewählten Hörinstrument (4a,4b) ausgeführt wird.

2. Verfahren nach Anspruch 1,
wobei Arbeitsergebnisse und/oder Zustände dieses Softwaremoduls (40,42, 44,46,48,50,54) auf das andere Hörinstrument (4a,4b) übertragen werden.

3. Verfahren nach Anspruch 1 oder 2,
wobei die dynamische Auswahl eines der beiden Hörinstrumente (4a,4b) zur selektiven Ausführung mindestens eines Softwaremoduls (40,42,44,46,48, 50,54) der Firmware (30) in Abhängigkeit der jeweiligen Batterieladung vorgenommen wird.

4. Verfahren nach Anspruch 1 oder 2,
wobei mehrere Softwaremodule (40,42,44,46,48,50,54) der Firmware (30) zur jeweils selektiven Ausführung derart auf die beiden Hörinstrumente (4a,4b) des Hörsystems (2) verteilt werden, dass Restbetriebszeiten der beiden Hörinstrumente (4a,4b) bis zur Erschöpfung der jeweiligen Batterieladung aneinander angeglichen werden.

5. Verfahren nach einem der Ansprüche 1 bis 4,
wobei mehrere Softwaremodule (40,42,44,46,48,50,54) der Firmware (30) zur jeweils selektiven Ausführung derart auf die beiden Hörinstrumente (4a,4b) des Hörsystems (2) verteilt werden, dass der Bedarf an Rechenleistung und/oder Arbeitsspeicherplatz für die auf beiden Hörinstrumenten (4a,4b) jeweils ausgeführten Softwaremodule (32,34,36,38,40,42,44,46,48, 50,54) aneinander angeglichen wird.

6. Binaurales Hörsystem (2) zur Unterstützung des Hörvermögens eines Nutzers, mit zwei jeweils in oder an einem Ohr des Nutzers getragenen Hörinstrumenten (4a,4b),
- wobei jedes der beiden Hörinstrumente (4a,4b) jeweils einen programmierbaren Signalprozessor (12a,12b) zur Modifikation eines Audiosignals, einen mit dem Signalprozessor (12a,12b) verschalten Ausgangswandler (8a,8b) zur Ausgabe des modifizierten Audiosignals (O) und eine Datenübertragungseinheit (16a,26b) zum Datenaustausch mit dem jeweils anderen Hörinstrument (4a,4b) aufweist,
- wobei in dem Hörsystem (2) eine eine Mehrzahl von Softwaremodulen (32,34,36,38,40,42,44,46,48,50,54) umfassende Firmware (30) installiert ist,
- wobei die Softwaremodule (32,34,36,38,40,42,44,46,48,50,54) in den Signalprozessoren (12a,12b) der beiden Hörinstrumente (4a,4b) ausführbar sind, und
- wobei die Softwaremodule (32,34,36,38,40,42,44,46,48,50,54) der Firmware (30) asymmetrisch auf die beiden Hörinstrumente (4a,4b) verteilt oder verteilbar sind, so dass im Betrieb des Hörsystems (2) mindestens eines der Softwaremodule (40,42,44,46,48,50,54) der Firmware (30) selektiv in einem der beiden Hörinstrumente (4a,4b) ausgeführt wird,
mit einer Verteilungseinheit (66), die dazu eingerichtet ist, für mindestens eines der Softwaremodule (40,42,44,46,48,50,54) der Firmware (30) beim Start oder im Betrieb des Hörsystems (2) dynamisch auszuwählen, auf welchem der beiden Hörinstrumente (4a,4b) dieses Softwaremodul (40,42,44,46,48,50,54) ausgeführt werden soll, und die selektive Ausführung dieses Softwaremodul (40,42,44,46,48,50,54) auf dem ausgewählten Hörinstrument (4a,4b) zu veranlassen.

7. Binaurales Hörsystem (2) nach Anspruch 6,
wobei dieses Softwaremodul (40,42,44,46,48,50,54) dazu eingerichtet ist, Arbeitsergebnisse und/oder Zustände mittels der Datenübertragungseinheit (26a,26b) auf das andere Hörinstrument (4a,4b) zu übertragen.

8. Binaurales Hörsystem (2) nach Anspruch 6 oder 7,
wobei die Verteilungseinheit (66) dazu eingerichtet ist, die dynamische Auswahl eines der beiden Hörinstrumente (4a,4b) zur selektiven Ausführung mindestens eines Softwaremoduls (40,42,44,46,48,50,54) der Firmware (30) in Abhängigkeit der jeweiligen Batterieladung vorzunehmen wird.

9. Binaurales Hörsystem (2) nach Anspruch 6 oder 7,
wobei die Verteilungseinheit (66) dazu eingerichtet ist, mehrere Softwaremodule (40,42,44,46,48,50,54) der Firmware (30) zur jeweils selektiven Ausführung derart auf die beiden Hörinstrumente (4a,4b) des Hörsystems (2) zu verteilen, dass Restbetriebszeiten der beiden Hörinstrumente (4a,4b) bis zur Erschöpfung der jeweiligen Batterieladung aneinander angeglichen werden.

10. Binaurales Hörsystem (2) nach einem der Ansprüche 6 bis 9,
wobei die Verteilungseinheit (66) dazu eingerichtet ist, mehrere Softwaremodule (40,42,44,46,48,50,54) der Firmware (30) zur jeweils selektiven Ausführung derart auf die beiden Hörinstrumente (4a,4b) des Hörsystems (2) zu verteilen, dass der Bedarf an Rechenleistung und/oder Arbeitsspeicherplatz für die auf beiden Hörinstrumenten (4a,4b) jeweils ausgeführten Softwaremodule (32,34,36,38,40,42,44,46,48,50,54) aneinander angeglichen wird.

11. Binaurales Hörsystem (2) nach einem der Ansprüche 6 bis 10,
wobei die Signalprozessoren (12a,12b), sowie vorzugsweise auch die übrigen Hardware-Komponenten der beiden Hörinstrumente (4a,4b), jeweils baugleich oder spiegelsymmetrisch zueinander ausgeführt sind.
